Europäisches Patentamt

(19) European Patent Office

Office européen des brevets

(11) Numéro de publication: **0 204 648**
**B1**

(12) **FASCICULE DE BREVET EUROPEEN**

(45) Date de publication du fascicule du brevet: **27.12.90**

(51) Int. Cl.⁵: **F 16 L 41/02, F 16 L 37/24**

(21) Numéro de dépôt: **86460008.5**

(22) Date de dépôt: **28.04.86**

(54) **Perfectionnement à la distribution des fluides en conduits multiples.**

(30) Priorité: **29.04.85 FR 8506628**

(43) Date de publication de la demande:
**10.12.86 Bulletin 86/50**

(45) Mention de la délivrance du brevet:
**27.12.90 Bulletin 90/52**

(84) Etats contractants désignés:
**DE GB IT SE**

(56) Documents cités:
**FR-A- 937 401**
**FR-A-2 193 168**
**FR-A-2 528 531**
**GB-A- 812 041**

(73) Titulaire: **LEGRIS**
**29 rue de La Palestine**
**F-35000 Rennes (FR)**

(72) Inventeur: **Legris, André**
**18 rue des Professeurs Pellé**
**F-35000 Rennes (FR)**

(74) Mandataire: **Dubreuil, Annie**
**Cabinet DUBREUIL Le Suffren 23 rue des**
**Peupliers**
**F-56100 Lorient (FR)**

Courier Press, Leamington Spa, England.

**Description**

La présente invention a pour objet un perfectionnement aux raccordements groupés de fluides pour la distribution d'un circuit principal en multiples circuits secondaires tubulaires. Le groupement des raccordements est de type modulaire.

Pour redistribuer des fluides en multiples tubes, la méthode classique est un gros collecteur métallique sur lequel se trouvent des tubulures filetées plus petites où l'on raccorde les multiples tubes. Ces collecteurs sont réalisés, par fonderie et usinage, ou par soudure.

Les raccordements des tubes sont très classiques et connus en général sur ces collecteurs. Ceux-ci n'offrent aucune souplesse sur la quantité de raccordements.

Leur coût est important et les coûts de raccordements sont élevés car ils demandent une main d'oeuvre de plomberie qualifiée très coûteuse.

Avec l'avènement récent de tubes en plastique résistants à la pression et à la chaleur d'importants efforts sont faits pour réaliser des raccords de distribution, plus pratiques, plus souples, modulaires, avec aussi, l'intégration dans les modules des nouveaux raccords "instantanés" de tubes qui ne demandent ni serrage, ni vissage, mais simplement de pousser le tube au fond d'un raccord spécial.

L'utilisation de plastique moulé de très haute qualité permet de mouler des collecteurs sophistiqués et à de faibles coûts.

L'inventeur possède lui-même de nombreux brevets dans ce domaine: brevet français No 2.528.531, le brevet français 2.067.506, allemand et français 2431680 et 7324472. On connaît aussi les brevets suivants: européen 0052717 - international WO 82/01205 américains 1103936 et 3.516.442 - 4.247.133 allemand 2.229.685.

Tous ces brevets si ils ont fait progresser la technique, présentent tous de sérieux inconvénients d'emplois et de coûts. Alors que les collecteurs métalliques n'étaient pas assez modulaires et avaient de coûteux raccordement de tubes, les brevets ci-dessus sont trop modulaires et leur assemblage en modules trop nombreux est finalement trop long et coûteux. Un juste milieu a donc été trouvé et l'invention réalise un système modulaire très poussé, mais peu coûteux par sa conception et son assemblage.

Les systèmes ne sont pas homogènes dans leur conception. Ils proposent un type d'assemblage des modules entre eux, queue d'arronde, glissière, tiges filetées pour la tenue, baïonnette. Mais ce n'est jamais fait avec le même assemblage au niveau du raccord des tubes qui s'assemblent soit en classique à vis, soit en raccords instantanés intégrés au module. Seul le brevet français 1.522.553 propose une glissière en queue d'arronde pour brancher le seul tube de sortie à brancher possible. Mais ce système fait pour l'arrosage est complètement hétérogène, les 3 sorties étant en systèmes différents.

La disposition suivant l'invention est l'aboutissement des nombreuses inventions dans ce domaine de l'inventeur, en particulier l'amélioration et le perfectionnement sans les inconvénients, à un coût bien réduit, du brevet 2.528.531 français de l'inventeur.

Dans la présente invention qui est un système modulaire souple, les raccordements des modules entre eux, des raccords de tubes et des différents accessoires possibles, liaisons, bouchons, robinets, electrovannes, ont un système de raccordement unique, identique, de même dimension, interchangeable. On utilise qu'un seul raccordement pour tous. Ce raccordement est un type particulier et adapté, spécialement robuste de baïonnette femelle et mâle. Bien que les systèmes à baïonnette soient bien connus, le système de l'invention, la façon de juxtaposer les baïonnettes côte à côte de façon à obtenir des modules plus ou moins importants, la conception des modules est nouvelle et originale. Et bien sûr est original le même raccordement pour modules et tubes.

L'invention concerne plus précisément un dispositif destiné au raccordement groupé de tubes ou accessoires pour fluides, pour une distribution à partir d'au moins un circuit principal, caractérisé en ce qu'il comprend:

des modules parallélépipédiques chacun contenant un canal central débouchant aux deux faces d'extrémité par deux orifices à baïonnettes femelles, et comportant sur au moins l'une de deux autres faces opposées des orifices à baïonnettes femelles identiques en communication avec ledit canal central, et

des éléments à baïonnette mâle. complémentaire desdites baïonnettes femelles, traversés par un orifice, dont une première extrémité comporte ladite baïonnette mâle pour le raccordement étanche à l'un des orifices à baïonnette femelle d'un module, lesdits éléments se subdivisant d'une part en éléments dont la seconde extrémité comporte une seconde baïonnette mâle identique, pour le raccordement de deux modules, d'autre part en éléments dont la seconde extrémité comporte des moyens des raccordement de tubes ou d'accessoires, pour le raccordement à des modules de tubes ou d'accessoires, et enfin en des éléments fermés par un fond, pour obturer les orifices des modules non utilisés à des raccordements.

Conformément à l'invention, les modules sont constitués d'un solide en forme générale de parallélépipède de section rectangulaire ou carrée, de différentes longueurs, suivant que l'on veut avoir peu d'orifices, ou pas mal d'orifices, ou beaucoup d'orifices. Ce parallélépipède possède quatre faces adjacentes plates dans lesquelles débouchent des orifices "tous identiques", possédant quatre taquets en relief dans un alésage cylindrique. Ces taquets sont en relief grâce à des évidements creusés derrière eux à partir des deux dernières faces opposées l'une à l'autre, faces planes (mais creusées). Chaque orifice possède donc sur les deux dernières faces du parallélépipède, deux évidements sur chacune de ces faces.

Les évidements forment avec les taquets et l'alésage cylindrique, des baïonnettes femelles à quatre positions le 90° en 90° de rotation. L'angle d'enclenchement de la baïonnette est une rotation de 45°. Ceci permet d'orienter les tubes dans quatre directions au choix.

Les orifices baïonnettes femelles communiquent tous avec le conduit central principal se trouvant dans l'axe longitudinal du parallélépipède.

Dans les orifices baïonnettes femelles se trouvent des éléments baïonnettes mâles de formes adaptées et complémentaires. Ces baïonnettes mâles se continuent à l'extérieur du module, soit sous forme d'une baïonnette mâle identique, formant liaison entre deux modules, soit formant bouchon d'obturation, soit formant des raccords pour tubes de différents types, soit formant tête de robinet à clapet, soit formant tête d'électrovanne à clapet, lesdits clapets coopérant avec une baïonnette mâle. Les baïonnettes mâles portant des raccords de tube, portent également coté module, un siège conique de clapet, coopérant avec un autre élément baïonnette mâle (type avec clapet) de l'orifice de la face juste opposée et de même axe.

Les baïonnettes mâles possèdent deux ou quatre nervures demi-rondes, sur un diamètre cylindrique, qui forment crantage en rotation avec des évidements complémentaires des taquets des baïonnettes femelles. Les crantages verrouillent solidement les baïonnettes mâles sur les femelles, sans effort axial.

Les baïonnettes femelles possèdent également deux butées en relief qui empêchent un montage dans le mauvais sens de rotation, et qui limitent également la fin de la rotation de verrouillage. Aucune fausse manoeuvre ne peut être faite au montage des baïonnettes, grâce aux butées.

Les baïonnettes mâles ont la forme d'une croix, ayant les bras reliés par un carré, la dite croix placée sur un cylindre.

Les faces des modules "creusées", possédant les évidements venant derrière les taquets des baïonnettes femelles, ne portent pas d'orifices baïonnettes et servent de faces d'appui sur un support plan. Deux ou quatre trous ou lumières de fixation traversent le module et permettent de le fixer avec des vis sur des supports plans.

Ainsi les formes des modules et des baïonnettes femelles, permettent leur moulage, avec démoulage naturel simple, suivant 2 directions opposées, des 4 taquets des baïonnettes femelles, dans des matières plastiques de qualité, à des prix très modérés, sans aucun usinage. Les baïonnettes mâles se moulant en plastique également très facilement par leur conception et avec tous leurs détails.

Ainsi il est possible de réaliser des modules avec 4 orifices, ou avec 6 orifices, ou avec 8 orifices, ou 10 orifices ou plus. Avec les 4 types de modules cités au-dessus, que l'on peut relier presque instantanément entre eux par des liaisons doubles mâles baïonnettes, il est possible de faire des montages modulaires, à multiples sorties de tubes, aux prix les plus bas. En effet les modules à 8 et 10 orifices sont bien moins coûteux que d'assembler pour réaliser la même distribution 3, 4, 5 ou 6 modules n'ayant sur 4 orifices que 2 sorties disponibles pour les tubes.

Une des importantes caractéristiques de l'invention est que sur les modules à chaque orifice femelle baïonnette on peut monter soit un autre module (avec une liaison) soit un raccord de tube, soit un bouchon, soit un accessoire robinet, electrovanne.

La souplesse est telle que le nombre des combinaisons possibles est énorme et que les utilisateurs créeront leurs propres produits eux-même. Les joints et la fiabilité permettent l'utilisation par une main d'oeuvre non spécialisée et sans formation.

L'utilisation de modules à 6, 8 et 10 orifices réduit la modularité à des proportions raisonnables et en même temps réduit le coût d'assemblage, le temps de montage, le nombre de joints. Les ensembles ainsi réalisés peuvent également être démontés, modifiés, éventuellement réparés très rapidement pour un coût très bas.

Les raccords pour tubes des baïonnettes mâles sont variés: instantanés pour tubes, mais aussi à filetage mâle ou femelle pour des raccordements classiques.

D'autres caractéristiques et avantages de l'invention seront mieux compris à la lecture de la description qui va suivre de plusieurs modes de réalisation et en se référant aux dessins annexés sur lesquels:

la figure 1 est une perspective d'une liaison baïonnette double mâle suivant l'invention, liaison servant à relier deux modules entre eux.

la figure 2 est une perspective cavalière d'un module seul suivant l'invention, avec ses orifices femelles baïonnettes.

la figure 3 est une perspective cavalière d'un bouchon baïonnette mâle.

la figure 4 est une vue en coupe partielle d'un ensemble de modules avec leurs raccords et un module robinet suivant l'invention, et les tubes suivant plusieurs directions.

la figure 5 est une coupe suivant l'axe BB de la figure 4 du module 4 suivant l'invention et les deux raccords baïonnettes mâles pour tubes.

la figure 6 est une coupe partielle de 2 modules 5 et 10 reliés par un bouchon 13 visible et les baïonnette mâles formant raccords, robinet à clapet et électrovanne à clapet suivant l'invention.

la figure 7 est une coupe partielle transversale d'un module avec les baïonnettes mâles, 2 types de joints entre les baïonnettes mâles et le corps du module, le siège et les guides de clapets dans les baïonnettes mâles raccords de tubes suivant l'invention.

la figure 8 est une coupe transversale par l'axe des lumières 2K servant à fixer le module suivant l'invention sur un support par des vis traversant ces lumières.

la figure 9 est une coupe partielle transversale d'un module 4 suivant l'axe BB avec les baïonnettes mâles raccords de tubes et leurs joints suivant l'invention.

les figures 10 et 11 montrent le bouchon suivant l'invention, baïonnette mâle et ses moyens de montage pour le tourner.

les figures 12 et 13 montrent les détails d'une baïonnette double mâle bouchon visible de liaison entre 2 modules suivant l'invention.

la figure 14 montre la baïonnette mâle raccord et le détail d'un raccord instantané pour tube, suivant l'invention.

la figure 15 montre la même chose mais avec une autre réalisation de raccord instantané, suivant l'invention.

la figure 16 montre la coupe du module nu de la figure 2 suivant l'invention, par le plan transversal du centre des 4 évidements derrière les taquets baïonnettes des orifices, en bout 2h du module 2 de la figure 2.

les figures 17 et 18 montrent les détails des baïonnettes mâles suivant l'invention et les nervures 1K 1/2 rondes servant de crantage en rotation. La figure 17 est la coupe suivant AA de la figure 18.

la figure 19 est la coupe partielle suivant CC du module 5 de la figure 6 suivant l'invention avec une baïonnette mâle robinet porte-clapet coopérant avec le siège de clapet d'une baïonnette mâle raccord de tube.

les figures 20 et 21 montrent une baïonnette mâle suivant l'invention, raccord taraudé tournant.

la figure 22 montre la coupe d'une baïonnette mâle, de plus petite dimension, raccord tournant, 1/2 vue en taraudage, 1/2 vue en vis mâle conique suivant l'invention.

la figure 23 montre la coupe suivant CC du module 5 de la figure 6 suivant l'invention et les détails de la baïonnette-mâle robinet à clapet à rampe hélicoïdale.

la figure 24 montre une variante de la vue 23 avec le clapet fermé commandé par une commande à vis et écrou.

la figure 25 montre la coupe suivant DD du module 5 de la figure 6 suivant l'invention et la baïonnette mâle électrovanne à clapet asservi, en ouverture, et la baïonnette mâle raccord de tube et son siège à clapet.

la figure 26 montre les coupes partielles de 2 modules suivant l'invention reliés entre eux par un robinet 28 à boisseau à corps parallélépipédique, possédant 2 orifices baïonnettes femelles 28e à ses extrémités, suivant l'invention, le raccordement entre le robinet 28 et les modules 10 et 4 étant fait par 2 liaisons baïonnettes double mâle 1.

la figure 27 montre le robinet à corps parallélépipédique 28, déjà vu à la figure 26, isolément, ayant dans ses deux baïonnettes femelles d'extrémité 28e suivant l'invention, 2 baïonnettes mâles 7h prolongées de raccords 7 de tubes 12.

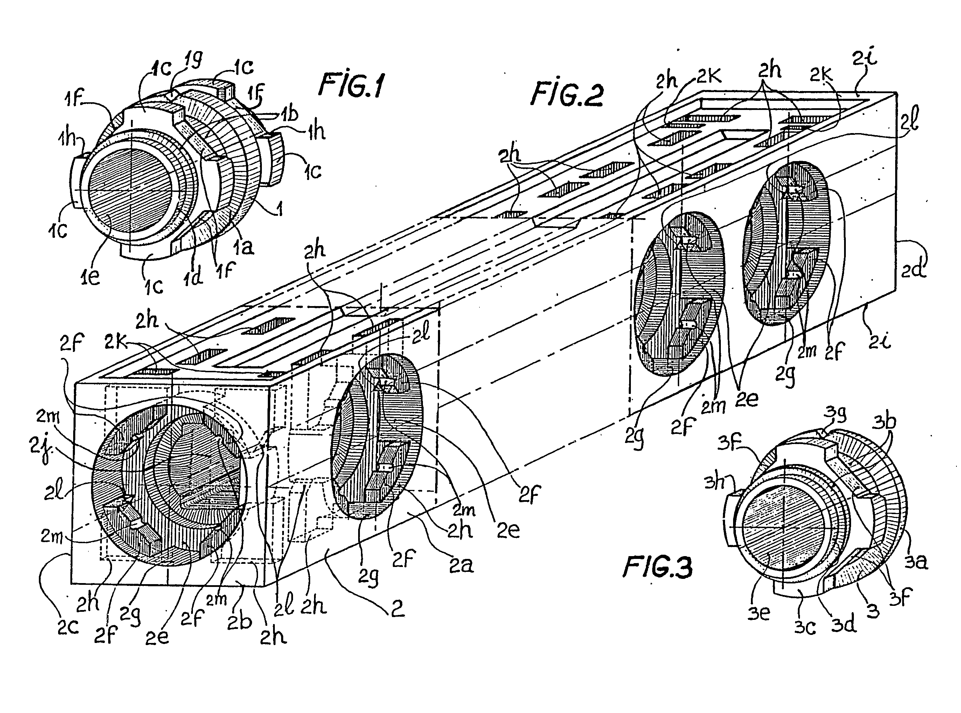

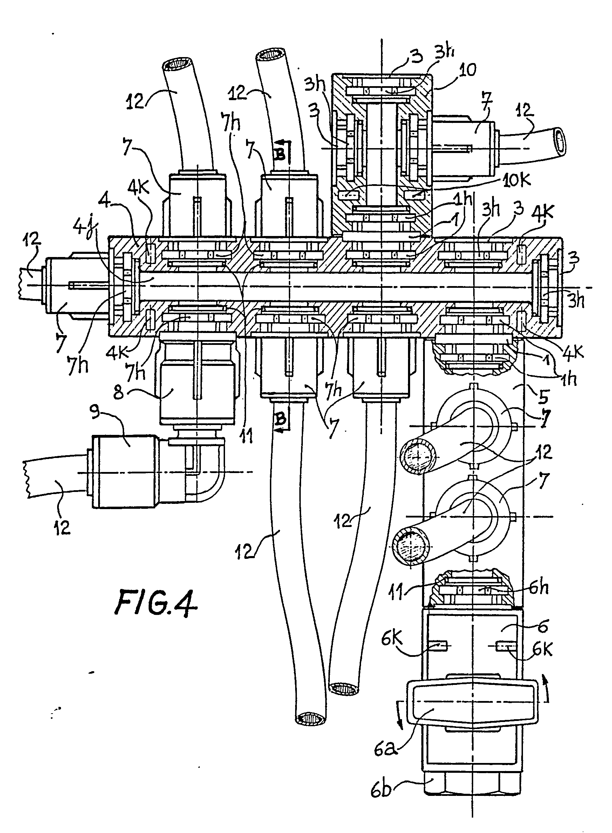

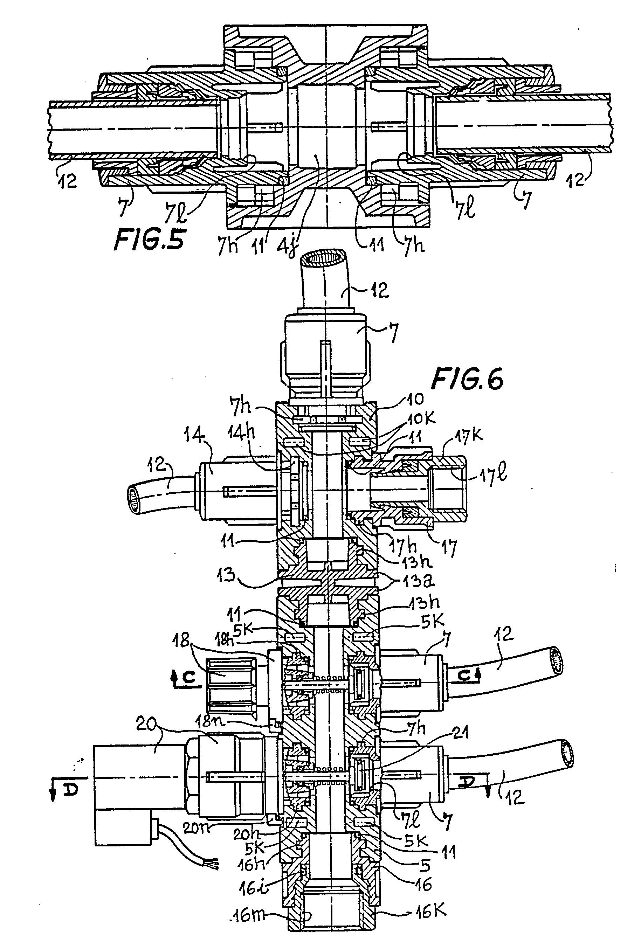

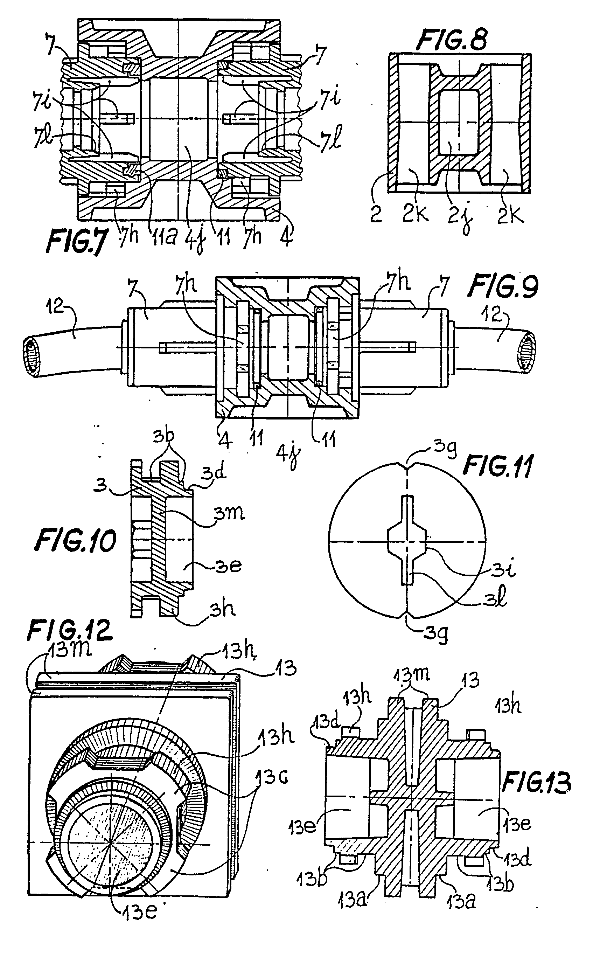

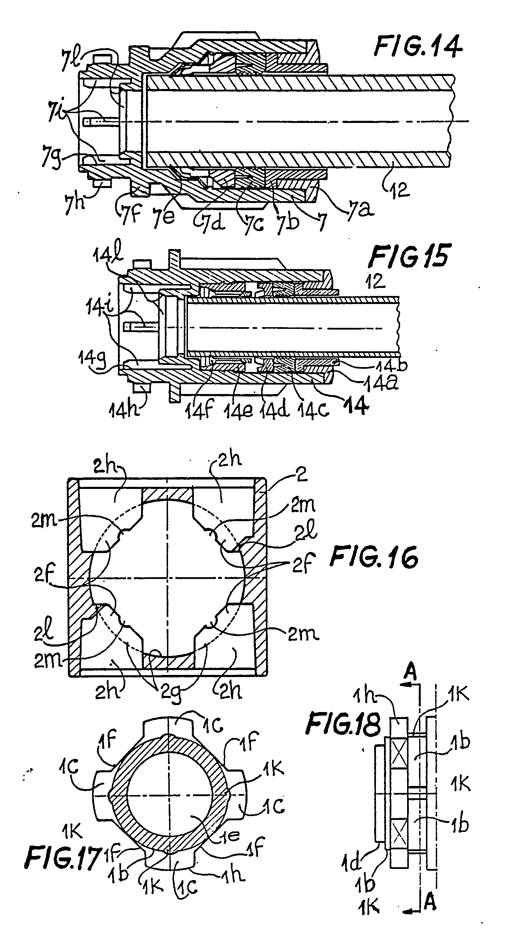

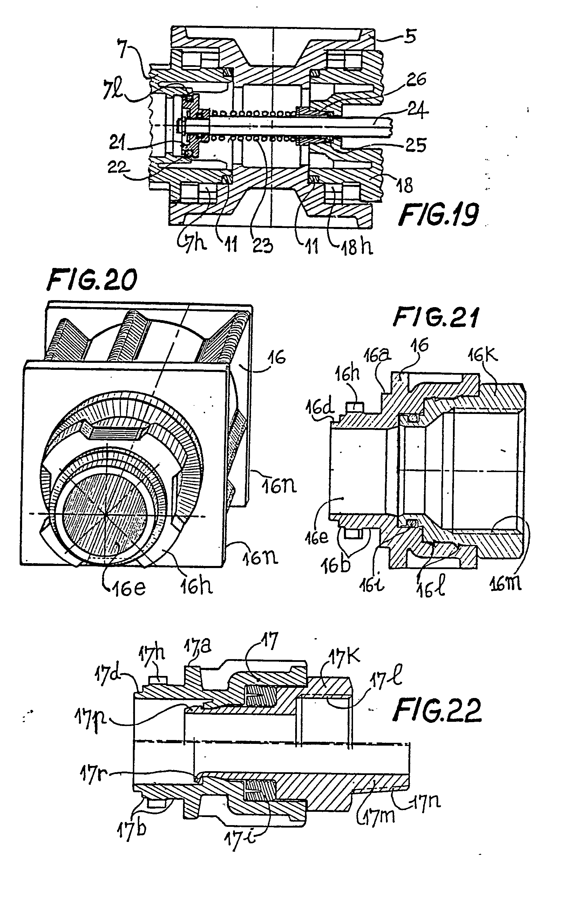

La figure 1 est une perspective d'une liaison baïonnette double mâle suivant l'invention, liaison servant à relier 2 modules entre eux. Cette baïonnette double mâle est également visible à la figure 17 et à la figure 18 où l'on y voit des détails. On voit également cette liaison baïonnette double mâle à la figure 4 où elle relie des modules entre eux. Le corps de la liaison 1 comporte une partie cylindrique A sur lequel se trouve une partie cylindrique plus petite de diamètre 1b. Sur cette partie cylindrique 1b se trouve placé un croisillon 1h dont les bras 1c sont reliés entre eux par un carré 1f. Aux deux extrémités on trouve une petite partie cylindrique 1d qui sert de portée pour le joint d'étanchéité. La liaison est traversée par un orifice 1e. Le croisillon a une forme complémentaire de la baïonnette femelle qui se trouve dans les modules. Ce sont les bras lc de la baïonnette mâle qui vont se placer par rotation derrière les taquets 2f des orifices baïonnettes femelles pour tenir les pièces du système entre elles.

La figure 2 est une perspective cavalière d'un module suivant l'invention. Le corps du module 2 est nu sur cette vue. Le corps 2 possède 4 faces adjacentes 2a, 2b, 2c, 2d qui sont planes et sur lesquelles on trouve les orifices baïonnettes femelles 2e, tous identiques. Ces orifices femelles 2e possèdent 4 taquets 2f en relief dans un alésage cylindrique 2g. Les taquets 2f sont en relief grâce à des évidements 2h creusés derrière eux à partir des 2 dernières faces opposées du parallélépipède composant le module. On peut voir sur les 2 dernières faces ne portant pas d'orifices, 2i, les évidements 2h qui débouchent dans un creux de la face 2i. Une des caractéristiques importantes de l'invention est que tous les évidements derrière les taquets 2f sont réalisés par moulage dans du plastique (ou toute autre matière) suivant 2 directions opposées seulement, à partir des 2 faces 2i. Le fait que ces évidements sont creusés suivant seulement 2 directions opposées, à raison de 4 évidements pour un orifice femelle baïonnette permet de mouler des modules comportant autant d'orifices que l'on désire. Soit 1, soit 2, soit 3, soit X orifices femelles baïonnettes sur les faces longues du parallélépipède. Et également on trouve un orifice à chaque bout du parallélépipède. Le nombre d'orifices n'est limité que par le procédé de fabrication du module. Tous les orifices sont reliés à un conduit central 2j qui traverse le module axialement. Les 4 faces adjacentes plates, 2a, 2b, 2c, 2d forment face d'appui pour d'autres modules qui seraient accouplés avec le premier module grâce à une liaison baïonnette double mâle visible sur la figure 1. Comme tous les orifices 2e sont identiques sur tous les modules quel que soit leur nombre d'orifices, toutes les combinaisons de montage entre modules sont possibles. Chaque orifice femelle baïonnette possède également 2 butées 21 qui empêchent de monter la baïonnette mâle dans le mauvais sens et qui servent également de butées de course en rotation. Chaque taquet 2f possède un cran demi-rond 2m servant de verrou en fin de rotation de la baïonnette mâle. Les baïonnettes mâles ont un relief demi-rond correspondant qui se crantent et se verrouillent par déformation radiale de la matière plastique, sans aucun effort axial. Les butées 2f limitent la rotation de la baïonnette à 45°. La baïonnette se caractérise par la possibilité de se monter suivant 4 directions orthogonales, de 90° en 90°. Ceci permet d'orienter les tubes de sortie dans toutes les directions désirées. Les faces 2i possèdent un pourtour plane et sont également creusées suivant les nécessités de la matière. C'est dans ce creux que débouchent les évidements 2h qui vont former les baïonnettes avec les taquets 2f. On trouve également dans ces faces 2i, au fond du creux, des lumières 2k qui sont soit au nombre de 2 pour les modules très courts, et au nombre de 4 pour les modules longs ces lumières sont placées aux extrémités du module et traversent le module complètement. C'est dans ces lumières 2k que l'on peut mettre des vis de fixation. Ces vis de fixation permettent de fixer les modules sur leurs faces planes 2i sur des supports plats. La figure 8 montre une coupe du module par le centre des lumières 2k de fixation pour les vis.

La figure 3 représente une baïonnette mâle 3h identique à la baïonnette 1h de la liaison double mâle 1 de la figure 1. Cette baïonnette double mâle est prolongée à l'autre bout par un dispositif fermé 3a, formant bouchon. Ce bouchon ne dépasse pas du tout de la surface plate du module. Le bouchon possède un 6 pans et une fente permettant de le monter et de le tourner pour le verrouiller. Ceci est visible aux figures 10 et 11 qui donnent des détails de ce bouchon. Ce bouchon comporte tous les éléments de là liaison baïonnette double mâle de la figure 1.

La figure 4 est une coupe partielle d'un ensemble de modules suivant l'invention, et possédant un nombre d'orifices différents. Le module 10 est un module à 4 orifices. Le module 5 est un module à 6 orifices. Le module 4 est un module à 10 orifices. Les modules sont reliés par les liaisons doubles males 1 possédant à chacune de leur extrémité des baïonnettes mâles 1h. L'étanchéité est réalisée par des joints toriques 11, qui sont placés entre la baïonnette mâle 1h et les corps des modules. On peut également voir sur la figure 4 des bouchons 3 fixés dans les modules par leurs baïonnettes 3h, et ne dépassant pas du module. On peut également voir des baïonnette mâles 7h identiques aux autres baïonnettes mâles, dont l'autre extrémité est un raccord 7 pour tubes 12. On aperçoit également sur la figure 4 un raccord coudé, composé d'un raccord 8 et d'un coude 9 avec sortie d'un tube 12. On peut aussi voir un robinet 6 prolongeant un module 5. Ce robinet 6 possède une baïonnette mâle 6h identique à toutes baïonnettes mâles et un joint d'étanchéité 11. Le robinet 6 possède une manette rotative 6a permettant d'ouvrir et de fermer le robinet. Il possède également un écrou 6b dans lequel se trouve un taraudage servant à la fixation classique de tube ou de raccordement à vis. Il convient de noter que l'orientation des tubes qui sortent de chacun des modules 4, 10 et 5 est différente. Ceci est possible grâce aux possibilités de la baïonnette à 4 positions possibles, qui permettent d'orienter chaque module dans le sens désiré par l'utilisateur.

La figure 5 est une coupe suivant l'axe BB de la figure 4 du module 4 suivant l'invention. La figure 5 montre 2 raccords baïonnette mâle 7h prolongés à leur autre extrémité par un raccord instantané 7 pour tubes 12. On y voit le détail du raccordement. On aperçoit également les joints d'étanchéité 11 et le canal central 4j du module 4, dans lequel viennent déboucher les raccords 7 pour tubes.

A la figure 6 on voit une coupe partielle de 2 modules 10 et 5. Le module 5 est un module à 6 orifices et le module 10 est un module à 4 orifices. Les 2 modules sont séparés par une liaison bouchon à double baïonnettes mâles 13h. Afin que l'utilisateur sache que ces 2 baïonnettes ne communiquent pas entre elles, le bouchon liaison est visible par les carrés, de même forme que les modules, 13a. On aperçoit sur la figure 6 également des baïonnettes mâles 7h prolongées par des raccords 7 pour tubes 12. Ces raccords sont donnés en détail à la figure 14. On voit également une baïonnette mâle identique aux autres 14h prolongée par un raccord 14 pour tubes 12. Ce raccord 14 différent du raccord 7 est visible à la figure 15. On aperçoit également dans l'axe CC une baïonnette mâle 18h identique aux autres baïonnettes mâles et prolongée à son autre extrémité par un robinet à clapet 18 coopérant avec une autre baïonnette mâle 7h possédant un raccord 7 pour tube 12. Ce robinet à clapet permet d'ouvrir de fermer ou de régler le débit du tuyau 12 situé dans l'axe CC. Le détail de cette pièce 18 et du clapet sont visibles à la figure agrandie 23. On trouve également sur la figure 6 dans l'axe DD une baïonnette 20h identique aux autres baïonnettes mâles et portant à son autre extrémité une électrovanne 20, à clapet 21 coopérant avec un raccord 7 pour tube 12. Cette électrovanne peut fermer ou ouvrir le débit du tube 12 de l'axe DD. On trouve également sur la figure 6 une baïonnette mâle 16h identique aux autres baïonnettes mâles et à son autre extrémité avec un taraudage 16m monté dans une pièce 16k tournante et orientable. Cette pièce 16 est visible en détail agrandi aux figures 20 et 21. On trouve également à la figure 6 la baïonnette mâle 17h identique aux autres baïonnettes et ayant à son autre extrémité un raccord taraudé 171 dans une pièce 17k rotative et orientable. Les 2 pièces 16 et 17 permettent de monter des raccordements à vis du commerce.

La figure 7 est une coupe partielle transversale d'un module suivant l'axe BB de la figure 4. On y voit 2 baïonnettes mâles 7h possédant des joints différents d'étanchéité entre la baïonnette mâle et le corps 4 du module. Sur le coté droit le joint d'étanchéité est réalisé par un joint torique 11 dont le serrage est radial, et qui ne donne aucune composante axiale. Au contraire sur le coté gauche de la figure on trouve un joint à lèvres 11a qui réalise l'étanchéité entre la baïonnette mâle et le module par un serrage axial. Ce joint 11a est incrusté et porté par la baïonnette mâle 7h, avec laquelle il est solidaire. On voit également sur la figure 7 le canal central 4j qui alimente les 2 baïonnettes mâles 7h et les raccords pour tube 7. Sont également visibles sur la figure 7 les sièges de clapets coniques 71 qui sont intégrés à la baïonnette mâle et les 4 nervures 7i qui servent de guidage aux clapets et de passages autour du clapet pour le fluide.

La figure 8 est une coupe transversale du module 2 de la figure 2 par le centre des lumières 2k qui servent à la fixation du module grâce à des vis sur une surface plane. On aperçoit également le canal central 2j.

La figure 9 est une coupe partielle transversale d'un module 4 suivant l'axe BB avec les baïonnettes mâles 7h des raccords 7 pour tube 12. On aperçoit les joints d'étanchéité toriques 11 et le canal central 4j.

Les figures 10 et 11 représentent le bouchon 3 baïonnette mâle 3h fermé par le fond 3m. Ce bouchon 3 possède sur sa face extérieure un 6 pans creux 3i et une fente 31 permettant, soit par l'un, soit par l'autre d'effectuer la rotation du bouchon pour sa fixation par baïonnette. On aperçoit également les repères 3g permettant de constater que le bouchon est bien verrouillé.

Aux figures 12 et 13 on voit les détails d'une baïonnette double mâle 13 qui forme bouchon étanche entre 2 modules. Le bouchon double mâle 13 doit rester visible pour l'utilisateur. C'est pourquoi il porte les 2 carrés 13m, qui restent bien visibles entre les modules. Sinon l'utilisateur ne saurait pas que les fluides de chaque module ne communiquent pas. Le bouchon visible 13 est également visible sur la figure 6.

La figure 14 est le détail d'une baïonnette mâle 7h qui a à l'autre bout un raccord instantané 7 pour tube 12. On y voit le détail du raccord instantané constitué d'un corps 7f, d'une butée soudée 7a, d'un poussoir de démontage 7b, d'un joint à lèvre 7c, d'un contre-poussoir 7d et d'une pièce de tenue du tube 7e. On y voit également le siège intégré conique pour clapet 71 et les 4 nervures de guidage du clapet, 7i en relief dans un alésage 7g. Le système de raccordement est instantané pour le tube 12 et appartient à un brevet de l'inventeur.

La figure 15 montre les mêmes détails que la figure 14 mais le système de raccord instantané est différent, ce système appartient également à un brevet de l'inventeur:il comporte la butée 14a soudée, le corps 14, le joint à lèvres 14c, le poussoir 14b, le contre-poussoir 14d, la douille 14e et la pince de tenue du tube 14f.

La figure 16 montre la coupe du module 2 nu de la figure 2 suivant l'invention, par le plan transversal du centre des 4 évidements derrière les taquets 2f baïonnette des orifices femelles se trouvant en bout du module 2 de la figure 2. On y aperçoit les 4 taquets 2f dans lesquels on voit les crans demi-ronds 2m de verrouillage. On voit les 4 évidements 2h et l'on aperçoit le diamètre cylindrique 2g par lequel sont en relief et avec lequel les taquets 2f forment la baïonnette femelle.

Les figures 17 et 18 montrent les détails des baïonnettes mâles suivant l'invention. On reconnait la baïonnette mâle 1h avec ses bras lc reliés par le carré 1f. On voit également à la figure 17 qui est la coupe AA les nervures demi-rondes 1k qui servent pour le verrouillage en rotation avec les creux 2m visibles figure 16. La figure 18 est une vue extérieure de la baïonnette mâle suivant l'invention. On y reconnait le diamètre 1d de portée du joint d'étanchéité torique, le guidage 1b cylindrique et les nervures demi-rondes 1k.

La figure 19 est une coupe partielle suivant CC de la figure 6. On y voit une baïonnette mâle identique aux autres baïonnettes mâles 18h portée par une pièce robinet à clapet 18 possédant une tige de clapet 24, un joint d'étanchéité 25, un ressort de fermeture du siège 23, un clapet 21 portant un joint d'étanchéité 22 faisant l'étanchéité sur le siège conique 71 d'une baïonnette 7h prolongée par un raccord 7 pour tube 12. Le clapet est représenté en position fermée sur le siège conique 71.

Les figures 20 et 21 sont les détails agrandis d'une baïonnette mâle 16h identique aux autres baïonnettes mâles, prolongée à son autre extrémité par un raccord 16k à vis 16m, tenue dans le corps 16 par les arêtes 161, possédant un joint 16i, tournant. Ce raccord 16k reçoit les raccordements du commerce pour tubes. La figure 20 est une perspective cavalière de ce raccord vue en coupe figure 21. De plus, ce raccord 16 est visible à la figure 6.

La figure 22 est un agrandissement de la baïonnette mâle 17h identique aux autres baïonnettes mâles, prolongée par un raccord tournant 17k ayant un joint à lèvres 17i. Ce raccord tournant 17k est représenté en demivue avec un taraudage 171 et dans l'autre demi-vue avec un bout mâle 17m possédant une vis conique 17n. Ce raccord 17 est visible sur la figure 6.

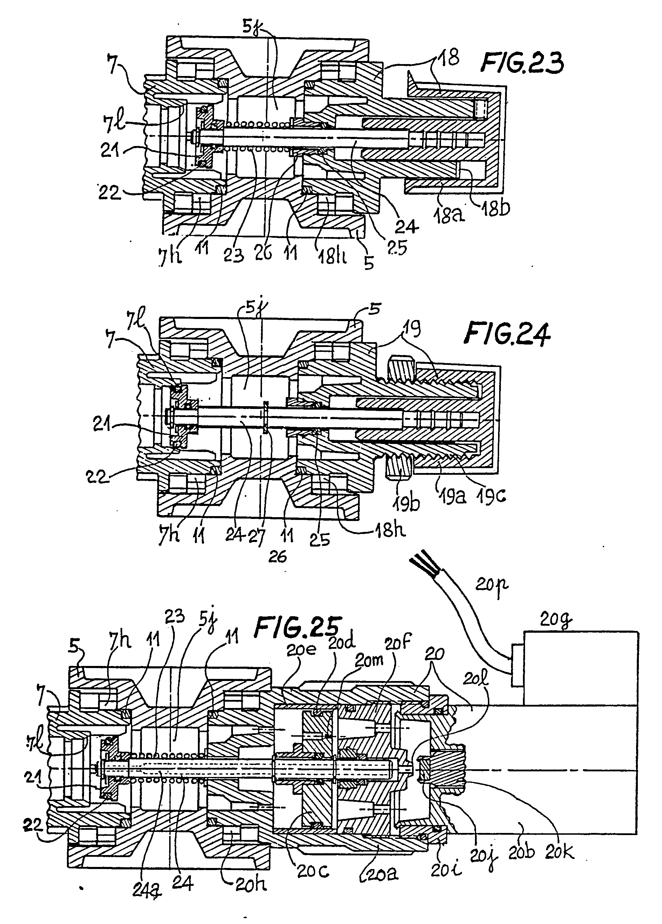

La figure 23 montre la coupe suivant CC du module 5 de la figure 6 suivant l'invention et les détails agrandis de la baïonnette mâle 18h prolongée à son autre extrémité par un robinet à clapet 18 possédant une manette 18a fonctionnant sur une rampe hélicoïdale crantée 18b. Le ressort 23 entrainant le clapet vers le bas et maintenant la manette 18 a au contact de la rampe 18b. Ce robinet à clapet 21 permet de faire le réglage et la fermeture du siège 71 de la baïonnette 71 ayant un raccord 7 pour tube 12.

La figure 24 est une variante de la figure 23 montrant un robinet à clapet dont la montée de la tige 24 et du clapet 21 sont réalisés par vis et écrou. La vis 19c permettant de monter et de descendre le clapet et un contre-écrou 19b permettant le blocage dans la position désirée.

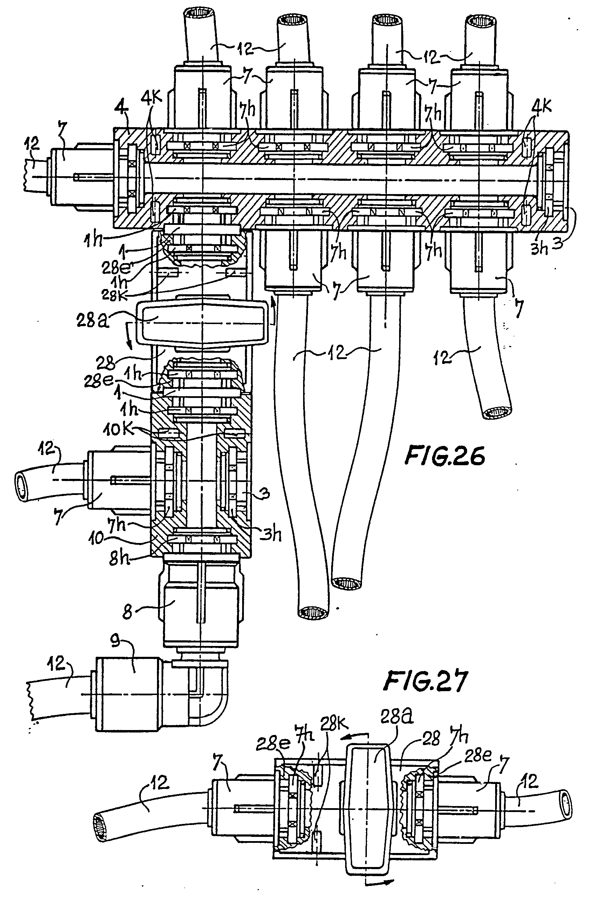

La figure 25 montre la coupe partielle par l'axe DD du module 5 de la figure 6 suivant l'invention et la baïonnette mâle 20h, identique aux autres baïonnettes s'étendant à son autre extrémité en une électrovanne 20 à clapet 20c asservi par le passage 20m, 201 et 24a. Le clapet 20j de l'électroaimant 20b porté par le plongeur 20k agissant sur le siège 201, réalisant l'ouverture ou la fermeture du clapet 21 sur son siège conique 71. Le clapet est ici représenté passage grand ouvert. Le siège 71 fait partie de la baïonnette 7h prolongée à son extrémité par le raccord 7 Pour raccord 12.

La figure 26 montre un ensemble de 2 modules 10 et 4 où un robinet 28 à corps parallélépipédique conforme à l'invention possède 2 orifices baïonnettes femelles 28e, identiques, de mêmes dimensions que sur les modules. Le robinet 28 sert à relier les 2 modules 4 et 10 entre eux, et il permet également de les isoler pour arrêter l'alimentation en fluide d'un partie des tubes 12. On peut par exemple couper l'alimentation en eau d'un étage ou un certain nombre de radiateurs que l'on souhaite ne plus alimenter.

La figure 27 montre le même robinet 28 en coupe partielle employé isolément avec, dans ses deux baïonnettes femelles 28e, 2 baïonnettes mâles 7h suivant l'invention, faisant raccords 7 de tubes 12 à leur extrémité, la manette 1/4 de tour 28a de manoeuvre du dit robinet.

Ces types de raccordement groupés multiples pour la distribution d'un fluide principal en multiples circuits tubulaires, trouvent leur application dans de nombreux secteurs industriels utilisant des fluides à redistribuer: alimentaires, conserveries, boissons, laboratoires, aquaculture, marine, caravanes, arrosage, serres, chauffage solaire, machines-outils, air comprimé, batîment, chauffage. Ce type de distribution de fluides est utilisé pour des basses pressions jusqu'à 8 ou 10 bars maximum. Ces emplois sont ceux qui sont les plus courant dans l'utilisation et représentent environ 60 à 70 % de l'utilisation des fluides du commerce. Une des utilisations importantes de ce système de distribution multiple de fluide est la distribution sanitaire d'eau chaude d'eau froide et de chauffage dans la maison individuelle et les immeubles.

## Revendications

1. Dispositif destiné au raccordement groupé de tubes ou accessoires pour fluides, pour une distribution à partir d'au moins un circuit principal, caractérisé en ce qu'il comprend:

des modules parallélépipédiques (2, 4, 5, 10), chacun contenant un canal central (2j) débouchant aux deux faces d'extrémité par deux orifices à baïonnettes femelles (2e), et, comportant sur au moins l'une de deux autres faces opposées des orifices à baïonnettes femelles identiques (2e) en communication avec ledit canal central (2j), et,

des éléments (1, 3, 7, 13, 14) à baïonnette mâle complémentaire des baïonnettes femelles (2e), traversés par un orifice (1e, 3e, 13e), dont une première extrémité comporte ladite baïonnette mâle pour le raccordement étanche à l'un des orifices à baïonnette femelle d'un module, lesdits éléments se subdivisant d'une part en éléments (1, 13) dont la seconde extrémité comporte une seconde baïonnette mâle identique, pour le raccordement de deux molules, d'autre part en éléments (7, 14) dont la seconde extrémité comporte des moyens de raccordement de tubes ou d'accessoires, pour le raccordement à des modules de tubes ou accessoires, et enfin en des éléments (3) fermés par un fond (3m), pour obturer les orifices des modules non utilisés à des raccordements.

2. Dispositif selon la revendication 1, caractérisé en ce que lesdits éléments (1, 13) de raccordement le deux modules comprennent les éléments (1) ouverts entre leurs deux extrémités, pour le raccordement de deux molules avec communication de leurs canaux centraux (4j), et des éléments (13) fermés entre leurs deux extrémités, pour le raccordement de deux modules sans communication de leurs canaux centraux.

3. Dispositif selon la revendication 1 ou 2, caractérisé en ce que, dans lesdits modules, les deux faces opposées (2i) exemptes d'orifices à baïonnettes femelles, servent de faces d'appui sur des supports plans, les modules étant fixés au moyen de vis logées dans des passages (2k) pratiqués dans les modules entre ces faces (2i).

4. Dispositif selon l'une des revendications 1 à 3, caractérisé en ce que les faces (2a, 2b, 2c, 2d) des modules où se trouvent les orifices femelles baïonnettes (2e) sont plates, formant faces d'appui pour un autre module (10 sur 4, 5 sur 4) accouplé par un élément à baïonnette mâle double (1 ou 13) formant liaison communicante ou non communicante entre deux modules, ou formant face d'appui à tout autre élément à baïonnette mâle portant une face spéciale d'appui (6, 13, 16).

5. Dispositif selon l'une des revendications 1 à 4, caractérisé en ce que dans les modules (2, 4, 5, 10), les baïonnettes femelles sont à quatre positions de 90° en 90° de rotation, l'angle d'enclenchement de la baïonnette étant une rotation de 45°, et en ce que sont prévus des moyens (2m, 1k) de verrouillage des baïonnettes mâles dans les baïonnettes femelles.

6. Dispositif selon l'une des revendications 1 à 5, caractérisé en ce que chaque orifice baïonnette femelle (2e) comporte deux reliefs angulaires (21) dans l'alésage cylindrique (2g), qui font office de butée en rotation aux baïonnettes mâles, dans les deux sens de rotation, empêchant un mauvais sens de rotation au montage (sens des aiguilles d'une montre), étant butées fixes en fin de rotation de 45° au montage, et étant butées fixes au démontage en fin de rotation de 45° dans le sens inverse des aiguilles d'une montre.

7. Dispositif selon l'une des revendications 1 à 6, caractérisé en ce que les éléments d'obturation (3) sont prévus de manière à ne pas dépasser du tout de la surface plate des modules, lesdits élément possédant un creux à six pans (3i) et une fente (31) pour le montage et le démontage.

8. Dispositif selon l'une des revendications 1 à 6, caractérisé en ce qu'il comprend des éléments de raccordement pour tube (7) comportant à leur seconde extrémité un raccord à tenue et étanchéité "instantanées" d'un tube (12).

9. Dispositif selon l'une des revendications 1 à 8, caractérisé en ce qu'il comprend des éléments à baïonnette mâle (7, 8, 14) possédant, côté module, un siège (71, 81, 141) conique de clapet (21) et également possédant des nervures (7i, 8i, 14i) guides du clapet (21) placés dans un alésage cylindrique (7g, 8g, 14g), ledit siège de clapet permettant fermeture et réglage du débit de fluide par le clapet (21).

10. Dispositif selon l'une des revendications 1 à 9, caractérisé en ce qu'il comprend des éléments à baïonnette mâle (16) pour le raccordement de tubes comportant à leur seconde extrémité une partie carrée (16n), de section égale à celle du module, avec un raccordement taraudé (16m) destiné aux raccordements à vis du commerce pour tubes de fluides, la pièce (16k) étant orientable par rapport à (16).

11. Dispositif selon l'une des revendications 1 à 10, caractérisé en ce qu'il comprend des éléments à baïonnette mâle prolongés par une partie portant un raccord fileté (17k), taraudé (171), ou fileté (17m), (17n), la partie (17k) étant montée "tournante", par encliquetage (17p) ou par sertissage (17r), un joint annulaire (17i) faisant l'étanchéité, l'ensemble (17) permettant tous raccordements du commerce par rotation de (17k) à la clé sans risque d'abîmer la baïonnette mâle par des efforts exagérés.

12. Dispositif selon l'une des revendications 1 à 11, caractérisé en ce qu'il comprend des éléments à baïonnette mâle dont la seconde extrémité comporte une tête de robinet à clapet (18, 19) portant un clapet (21), ledit clapet faisant robinet de fermeture et de réglage sur le siège conique (71) d'un autre élément à baïonnette mâle (7h) placé sur le même axe sur l'orifice femelle à baïonnette de la face opposée du module (5), ledit robinet à clapet comportant un bouton de manoeuvre (18a, 19a) comme moyen de réglage et de fermeture, et ledit robinet comportant les joints nécessaires à l'étanchéité (22, 25).

13. Dispositif selon l'une des revendications 1 à 12, caractérisé en ce qu'il comprend des éléments à baïonnette mâle comportant à leur seconde extrémité une tête d'électrovanne (10) asservie, à clapet (21), ledit clapet faisant fermeture ou ouverture sur le siège conique (71) d'un élément à baïonnette mâle (7h) placé dans le même axe sur l'orifice à baïonnette femelle opposé de la face opposée du module.

14. Dispositif selon l'une des revendications 1 à 13, caractérisé en ce que l'étanchéité entre élément à baïonnette mâle (7h) et module (4) est réalisée par un joint à lèvre (11a) à serrage axial, incrusté et porté par la baïonnette mâle (7h).

15. Dispositif selon l'une des revendications 1 à 14, caractérisé en ce qu'il comprend des éléments à corps parallélépipédique de même section que lesdits modules, comportant un robinet (6) de barrage à boisseau, à une extrémité une baïonnette mâle (6h) et à l'autre extrémité un trou taraudé pour y fixer les raccordements à vis du commerce, ledit robinet placé comme les baïonnettes mâles, ledit robinet comportant une face plane et des lumières de fixation (6k) pour des vis.

16. Dispositif selon l'une des revendications 1 à 15, caractérisé en ce qu'il comprend des éléments à corps parallélépipédique de même section que les modules, comportant un robinet (28) de barrage et, à chaque extrémité du corps parallélépipédique un orifice (2e) à baïonnette femelle, ledit robinet (28) placé entre deux modules ou isolément avec les accessoires appropriés: éléments de liaison à double baïonnette mâle (1), ou éléments de raccordement à baïonnette mâle (7, 8, 14, 16, 17), ledit robinet module possédant une face plane de fixation et des lumières (28k) pour la fixation par des vis, ledit corps ayant le moulage des évidements de ses deux baïonnettes femelles (2e), fait suivant deux directions opposées, lesdites baïonnettes femelles (2e) étant identiques à celles des modules.

**Patentansprüche**

1. Vorrichtung zur Gruppenverbindung von Fluidrohren oder -zubehör für eine Verteilung, die ihren Ausgangspunkt in wenigstens einer Hauptleitung hat,
gekennzeichnet durch
Module in Quaderform (2, 4, 5, 10), von denen jeder einen an zwei Stirnseiten über zwei Öffnungen mit Bajonettverschluß-Buchsen (2e) ausmündenden Mittelkanal (2j) enthält und an wenigstens einer von zwei anderen, gegenüberliegenden Seiten identische Öffnungen mit Bajonettverschluß-Buchsen (2e), die mit dem Mittelkanal (2j) in Verbindung stehen, umfaßt, und
Bajonettverschluß-Steckerelemente (1, 3, 7, 13, 14), die zu den Bajonettverschluß-Buchsen (2e) komplementär sind und von einer Öffnung (1e, 3e, 13e) durchsetzt werden, deren erstes Ende den Bajonettverschluß-Stecker für die dichte Verbindung mit einer der Öffnungen mit Bajonettverschluß-Buchse eines Moduls umfaßt, wobei die Elemente einerseits in Elemente (1, 13), deren zweites Ende einen zweiten, identischen Bajonettverschluß-Stecker für die Verbindung zweier Module umfaßt, andererseits in Elemente (7, 14), deren zweites Ende Mittel zur Verbindung von Rohren oder von Zubehör für den Anschluß von Rohren oder von Zubehör an die Module umfaßt, und schließlich in Elemente (3), die durch einen Boden (3m) verschlossen sind, um die nicht für Verbindungen verwendeten Öffnungen der Module abzusperren, unterteilt werden.

2. Vorrichtung gemäß Anspruch 1, dadurch gekennzeichnet, daß die Elemente (1, 13) für die Verbindung zweier Module Elemente (1), die zwischen ihren beiden Enden offen sind, um zwei Module unter Verbindung ihrer Mittelkanäle (4j) zusammenzuschließen, und Elemente (13), die zwischen ihren zwei Enden geschlossen sind, um zwei Module ohne Verbindung ihrer Mittelkanäle zusammenzuschließen, aufweisen.

3. Vorrichtung gemäß Anspruch 1 oder 2, dadurch gekennzeichnet, daß in den Modulen die zwei gegenüberliegenden Seiten (2i), die keine Öffnungen mit Bajonettverschluß-Buchsen enthalten, als Abstützflächen gegen ebene Träger dienen, wobei die Module mittels Schrauben befestigt werden, die in in den Modulen zwischen diesen Seiten (2i) ausgebildete Durchgänge (2k) eingeführt werden.

4. Vorrichtung gemäß einem der Ansprüche 1 bis 3, dadurch gekennzeichnet, daß die Seiten (2a, 2b, 2c, 2d) der Module, an denen sich die Öffnungen mit Bajonettverschluß-Buchsen (2e) befinden, eben sind und Abstützflächen für einen anderen Modul (10 an 4, 5 an 4) bilden, der mittels eines Elementes mit Bajonettverschluß-Doppelstecker (1 oder 13), das zwischen zwei Modulen eine offene oder eine geschlossene Verbindung herstellt, angekoppelt wird, oder eine Abstützfläche für ein völlig anderes Element mit Bajonettverschluß-Stecker bilden, das eine spezielle Abstützfläche (6, 13, 16) aufweist.

5. Vorrichtung gemäß einem der Ansprüche 1 bis 4, dadurch gekennzeichnet, daß in den Modulen (2, 4, 5, 10) die Bajonettverschluß-Buchsen vier Positionen im 90°-Winkelabstand aufweisen, wobei der Einrastwinkel des Bajonettverschlusses einer Drehung von 45° entspricht, und daß Mittel (2m, 1k) zum Einrasten der Bajonettverschluß-Stecker in den Bajonettverschluß-Buchsen vorgesehen sind.

6. Vorrichtung gemäß einem der Ansprüche 1 bis 5, dadurch gekennzeichnet, daß jede Öffnung mit Bajonettverschluß-Buchse (2e) in der zylindrischen Bohrung (2g) zwei winkelige Erhöhungen (21) aufweist, die bei Drehung der Bajonettverschluß-Stekker in den zwei Drehsinnen als Anschlag dienen und eine Drehung im falschen Drehsinn beim Zusammenbau (Drehung im Uhrzeigersinn) verhindern, wobei sie feste Anschläge am Ende einer Drehung um 45° beim Zusammenbau und feste Anschläge am Ende einer Drehung um 45° im Gegenuhrzeigersinn beim Zerlegen bilden.

7. Vorrichtung gemäß einem der Ansprüche 1 bis 6, dadurch gekennzeichnet, daß die Verschlußelemente (3) so vorgesehen sind, daß sie nicht über die gesamte ebene Oberfläche der Module vorstehen, wobei die Elemente ein sechseckiges Loch (3i) und einen Schlitz (31) für den Zusammenbau und die Zerlegung besitzen.

8. Vorrichtung gemäß einem der Ansprüche 1 bis 6, gekennzeichnet durch Rohrverbindungselemente (7), die an ihrem zweiten Ende eine festhaltende und schnelldichtende Rohrverbindung (12) aufweisen.

9. Vorrichtung gemäß einem der Ansprüche 1 bis 8, gekennzeichnet durch Elemente mit Bajonettverschluß-Stecker (7, 8, 14), die modulseitig einen konischen Ventilklappensitz (21) und außerdem Führungsrippen (7i, 8i, 14i) für die Ventilklappe (21), die in einer zylindrischen Bohrung (7g, 8g, 14g) angeordnet sind, besitzen, wobei der Ventilklappensitz die Absperrung und die Steuerung der durch die Ventilklappe (21) strömenden Fluidmenge gestattet.

10. Vorrichtung gemäß einem der Ansprüche 1 bis 9, gekennzeichnet durch Elemente mit Bajonettverschluß-Stecker (16) zur Verbindung von Rohren, die an ihrem zweiten Ende einen vierekkigen Abschnitt (16n) umfassen, dessen Querschnitt gleich demjenigen des Moduls ist, wobei die Elemente (16) eine mit einem Innengewinde versehene Verbindung (16m) umfassen, die der handelsüblichen Schraubbefestigung von Fluidrohren dient, wobei das Teil (16k) in bezug auf (16) ausrichtbar ist.

11. Vorrichtung gemäß einem der Ansprüche 1 bis 10, gekennzeichnet durch Elemente mit Bajonettverschluß-Stecker, die um einen einen Schraubanschluß (17k) mit Innengewinde (171) oder Außengewinde (17m), (17n) tragenden Teil verlängert sind, wobei der Teil (17k) mittels Verklinkung (17p) oder mittels Quetschverbindung (17r) ″drehbar″ angebracht ist, wobei ein Dichtungsring (17i) die Dichtigkeit herstellt und wobei die Gesamtanordnung (17) sämtliche handelsüblichen Verbindungen durch Drehung von (17k) mit einem Schraubenschlüssel gestattet, ohne daß die Gefahr der Beschädigung des Bajonettverschluß-Steckers durch zu starke Spannungen besteht.

12. Vorrichtung gemäß einem der Ansprüche 1 bis 11, gekennzeichnet durch Elemente mit Bajonettverschluß-Stecker, deren zweites Ende einen eine Ventilklappe (21) tragenden Ventilkopf (18, 19) aufweist, wobei die Ventilklappe eine Ventilabsperrung und eine Ventilsteuerung am konischen Sitz (71) eines anderen Elementes mit Bajonettverschluß-Stecker ausführt, wobei das andere Element auf der gleichen Achse an der Öffnung mit Bajonettverschluß-Buchse auf der gegenüberliegenden Seite des Moduls (5) angeordnet ist, wobei das Ventil mit Ventilklappe als Steuer- und Absperrmittel einen Betätigungsknopf (18a, 19a) aufweist und wobei das Ventil die für die Abdichtung notwendigen Dichtungen (22, 25) aufweist.

13. Vorrichtung gemäß einem der Ansprüche 1 bis 12, gekennzeichnet durch Elemente mit Bajonettverschluß-Stecker, die an ihrem zweiten Ende einen getriggerten Elektroventilkopf (10) mit Ventilklappe (21) aufweisen, wobei die Ventilklappe die Schließung oder die Öffnung am konischen Sitz (71) eines Elementes mit Bajonettverschluß-Stecker (7h) ausführt, das auf der gleichen Achse an der Öffnung mit Bajonettverschluß-Buchse, die der gegenüberliegenden Seite des Moduls gegenüberliegt, angeordnet ist.

14. Vorrichtung gemäß einem der Ansprüche 1 bis 13, dadurch gekennzeichnet, daß die Dichtheit zwischen dem Element mit Bajonettverschluß-Stecker (7h) und dem Modul (4) durch eine Lippendichtung (11a) mit axialer Klemmung bewerkstelligt wird, die vom Bajonettverschluß-Stecker (7h) eingedrückt und getragen wird.

15. Vorrichtung gemäß einem der Ansprüche 1 bis 14, gekennzeichnet durch Elemente mit einem Quader-Körper mit einem Querschnitt, der gleich demjenigen der Module ist, mit einem Absperrventil (6) mit Hahnküken, mit einem Bajonettverschluß-Stecker (6h) an einem Ende und einem mit einem Innengewinde versehenen Loch am anderen Ende, um dort die handelsüblichen Schraubbefestigungen anzubringen, wobei das Ventil wie die Bajonettverschluß-Stecker angeordnet ist und wobei das Ventil eine ebene Seite und Befestigungslöcher (6k) für die Schrauben aufweist.

16. Vorrichtung gemäß einem der Ansprüche 1 bis 15, gekennzeichnet durch Elemente mit Quader-Körper, dessen Querschnitt gleich demjenigen der Module ist, mit einem Absperrventil (28) und einer Öffnung mit Bajonettverschluß-Buchse (2e) an jedem Ende des Quader-Körpers, wobei das Ventil (28) zwischen zwei Modulen oder einzeln mit geeignetem Zubehör: Verbindungselementen mit Bajonettverschluß-Doppelstecker (1) oder Anschlußelementen mit Bajonettverschluß (7, 8, 14, 16, 17), angeordnet ist, wobei der Ventilmodul eine ebene Befestigungsseite und Löcher (28k) für die Befestigung der Schrauben besitzt und wobei der Körper die in zwei entgegengesetzten Richtungen ausgeführte Ausformung der Aussparungen seiner zwei Bajonettverschluß-Buchsen (2e), die mit denjenigen der Module identisch sind, umfaßt.

**Claims**

1. Device for the connection of tubes or accessories for fluids in groups, for distribution from at least one main circuit, characterised in that it includes:

parallelepipedic modules (2, 4, 5, 10), each containing a central channel (2j) opening out at the two end faces by two orifices with female bayonets (2e), and comprising on at least one of two other opposed faces orifices with identical female bayonets (2e) in communication with the said central channel (2j), and

elements (1, 3, 7, 13, 14) with male bayonets complementary to the female bayonets (2e), traversed by an orifice (1e, 3e, 13e), of which a first end comprises the said male bayonet for sealing-tight connection to one of the orifices with female bayonet of a module, the said elements being divided on the one hand into elements (1, 13) whose second end comprises a second identical male bayonet, for the connection of two modules, on the other hand into elements (7, 14) whose second end comprises means for the connection of tubes or accessories, for connection to modules of tubes or accessories, and lastly into elements (3) closed by a bottom (3m), for blocking the orifices of the modules not used for connections.

2. Device according to claim 1, characterised in that the said elements (1, 13) for connecting two modules include elements (1) which are open between their two ends, for the connection of two modules with communication of their central channels (4j), and elements (13) which are closed between their two ends, for the connection of two modules without communication of their central channels.

3. Device according to claim 1 or 2, characterised in that, in the said modules, the two opposed faces (2i) free from orifices with female bayonets have faces for bearing on planar supports, the modules being fixed by means of screws accommodated in passages (2k) formed in the modules between these faces (2i).

4. Device according to one of claims 1 to 3, characterised in that the faces (2a, 2b, 2c, 2d) of the modules in which are located the orifices with female bayonets (2e) are flat, forming bearing faces for another module (10 on 4, 5 on 4) coupled by an element with double male bayonet (1 or 13) forming a communicating or non-communicating link between two modules, or forming a bearing face for any other element with male bayonet carrying a special bearing face (6, 13, 16).

5. Device according to one of claims 1 to 4, characterised in that in the modules (2, 4, 5, 10), the female bayonets have four positions from 90° to 90° in rotation, the angle of engagement of the bayonet being a rotation of 45°, and in that means (2m, 1k) are provided for locking the male bayonets in the female bayonets.

6. Device according to one of claims 1 to 5, characterised in that each orifice with a female bayonet (2e) comprises two angular projections (21) in the cylindrical bore (2g), which act as rotational stops for the male bayonets, in both directions of rotation, preventing the wrong direction of rotation for assembly (clockwise direction), being fixed stops at the end of rotation of 45° at assembly, and being fixed stops at disassembly at the end of rotation of 45° in the anticlockwise direction.

7. Device according to one of claims 1 to 6, characterised in that the blocking elements (3) are provided so as not to project beyond the flat surface of the modules at all, the said elements having a six-sided recess (3i) and a slot (31) for assembly and disassembly.

8. Device according to one of claims 1 to 6, characterised in that it comprises connecting elements for a tube (7) comprising at their second end a connector with "instantaneous" stability and sealing of a tube (12).

9. Device according to one of claims 1 to 8, characterised in that it comprises elements with male bayonet (7, 8, 14) having, on the module side, a conical seat (71, 81, 141) for a valve (21) and also having grooves (7i, 8i, 14i) for guiding the valve (21) placed in a cylindrical bore (7g, 8g, 14g), said valve seat allowing closure and adjustment of the fluid flow through the valve (21).

10. Device according to one of claims 1 to 9, characterised in that it comprises elements with male bayonet (16) for the connection of tubes comprising at their second end a square portion (16n), of section equal to that of the module, with a tapped connection (16m) for commercial screw connections for tubes of fluids, the piece (16k) being orientable relative to (16).

11. Device according to one of claims 1 to 10, characterised in that it comprises elements with male bayonet extended by a portion carrying a connector which is threaded (17k), tapped (171), or threaded (17m), (17n), the portion (17k) being mounted "rotatably," by latching (17p) or by crimping (17r), a sealing ring (17i) providing sealing, the whole assembly (17) allowing any commercial connections by rotation of (17k) with a spanner without risk of destroying the male bayonet by exaggerated force.

12. Device according to one of claims 1 to 11, characterised in that it comprises elements with male bayonet whose second end comprises a valve tap head (18, 19) comprising a valve (21), the said valve acting as a tap for closure and adjustment on the conical seat (71) of another element with male bayonet (7h) placed on the same axis on the female orifice with bayonet of the opposite face of the module (5), said valve tap comprising a switch button (18a, 19a) as a means of adjustment and closure, and the said tap comprising the washers necessary for sealing (22, 25).

13. Device according to one of claims 1 to 12, characterised in that it comprises elements with male bayonet comprising at their second end a servo-controlled solenoid valve head (10), with valve (21), the said valve serving for closure or opening on the conical seat (71) of an element with male bayonet (7h) placed in the same axis on the opposite orifice with female bayonet of the opposite face of the module.

14. Device according to one of claims 1 to 13, characterised in that sealing between the element with male bayonet (7h) and the module (4) is provided by a lip seal (11a) with axial clamping, inlaid and carried by the male bayonet (7h).

15. Device according to one of claims 1 to 14, characterised in that it comprises elements with parallelepipedic body of the same section as the said modules, comprising a stop tap (6) with a cock, at one end a male bayonet (6h) and at the other end a tapped hole for fixing commercial screw connections therein, the said tap placed like the male bayonets, the said tap comprising a planar face and fixing hoies (6k) for screws.

16. Device according to one of claims 1 to 15, characterised in that it comprises elements with parallelepipedic body of the same section as the modules, comprising a stop tap (28) and, at each end of the parallelepipedic body an orifice (2e) with female bayonet, the said tap (28) placed between two modules or separately with the appropriate accessories connecting elements with double male bayonet (1), or connecting elements with male bayonet (7, 8, 14, 16, 17), the said module tap having a planar face for fixing and holes (28k) for fixing by screws, the said body having casting of the recesses of its two female bayonets (2e) done in two opposite directions, the said female bayonets (2e) being identical with those of the modules.

EP 0 204 648 B1

FIG.1

FIG.2

FIG.3

1

FIG.4

FIG.5

FIG.6

FIG.7

FIG.8

FIG.9

FIG.10

FIG.11

FIG.12

FIG.13

FIG.14

FIG 15

FIG.16

FIG.18

FIG.17

FIG.19

FIG.20

FIG.21

FIG.22

FIG.23

FIG.24

FIG.25

*FIG.26*

*FIG.27*